# EUROPÄISCHE PATENTSCHRIFT

(11) **EP 1 988 009 B1**
(45) Veröffentlichungstag und Bekanntmachung des Hinweises auf die Patenterteilung: **01.02.2012**
(21) Anmeldenummer: 08007593.0
(22) Anmeldetag: 18.04.2008
(51) Int. Cl.: B62K 25/24, B62K 21/22, B62K 21/08, B62K 5/00

(54) **Steuervorrichtung**
Steering device
Dispositif de direction

(30) Priorität: 02.05.2007 DE 102007020580
(43) Veröffentlichungstag der Anmeldung: 05.11.2008
(73) Patentinhaber: KTM Sportmotorcycle AG, 5230 Mattighofen (AT)
(72) Erfinder: Matschl, Gerald, 5230 Mattighofen (AT); Gustafson, Torbjörn, 5165 Berndorf (AT)
(74) Vertreter: Söllner, Udo

(56) Entgegenhaltungen:
- EP-A- 1 707 483
- DE-A1- 2 710 651
- US-A- 4 667 765
- US-A- 4 749 205
- US-A1- 2005 077 100
- US-B1- 6 767 022

## Beschreibung

Die vorliegende Erfindung betrifft eine Steuervorrichtung für ein zweispuriges Fahrzeug mit Fahrersattel und Fahrzeugrahmen, wobei die Steuervorrichtung eine an einer Lenksäule angeordnete Lenkerbrücke und eine Lenkstange besitzt und an der Lenksäule ein Lenkhebel vorgesehen ist, der mit Spurstangen zur Übertragung einer Drehbewegung der Lenksäule auf Fahrräder gekoppelt ist.

US-A-2005/0077100 offenbart eine Steuervorrichtung gemäß Oberbegriff des Anspruchs 1.

Bei dem vorstehend genannten Fahrzeug mit einem Fahrersattel kann es sich beispielsweise um ein mit vier Rädern ausgestattetes geländegängiges Fahrzeug handeln, ein so genanntes All-Terrain-Vehicle, das kurz auch ATV genannt wird. Ein solches Fahrzeug wird mittels einer Lenkstange gesteuert, wobei die Verschwenkbewegung der Lenkstange über eine Lenkerbrücke auf eine Lenksäule übertragen wird und an dem der Lenkstange gegenüberliegenden Ende der Lenksäule ein Lenkhebel vorgesehen ist, an dem Spurstangen angreifen, so dass letztendlich die Verschwenkbewegung der Lenkstange zu einer Drehung der Lenksäule führt und diese Drehung der Lenksäule über den Lenkhebel auf die Spurstangen übertragen wird und von diesem dann auf die Fahrzeugräder.

Wird ein solches ATV im unbefestigten Gelände oder auch auf einer befestigten Fahrbahn bewegt und es werden entsprechende Lenkimpulse von dem auf dem Fahrersattel sitzenden Fahrer auf die Lenkstange ausgeübt, so kann es erwünscht sein, einen sogenannten Lenkungsdämpfer am Fahrzeug vorzusehen, der dafür sorgt, dass kleine und unerwünschte oder impulsartige auf die Lenkstange ausgeübte Lenkbewegungen nicht auf die Fahrzeugräder übertragen werden oder auch von den Fahrzeugrädern auf die Lenksäule rückgeführte die Fahrtrichtung verändernde Stöße nicht sofort zu einer tatsächlichen Fahrtrichtungsänderung des gattungsgemäßen Fahrzeugs führen.

Bekannte gattungsgemäße Fahrzeuge besitzen eine Steuervorrichtung, die als Schweißkonstruktion ausgebildet ist, bei der die Lenkerbrücke mit der Lenksäule verschweißt ist und ebenso der Lenkhebel mit der Lenksäule verschweißt ist. Die genannten Bauteile sind dabei aus einem Stahlwerkstoff gefertigt und besitzen daher eine entsprechend große Eigenmasse. Wird nun an einem solchen Fahrzeug ein Lenkungsdämpfer angebracht, so wird der Lenkungsdämpfer, bei dem es sich beispielsweise um einen Rotationslenkungsdämpfer handelt, an Rohren des Fahrzeugrahmens über eine Klemmverbindung befestigt, da bekannte derartige Fahrzeuge keine eigenständige Aufnahme für den Lenkungsdämpfer besitzen. In entsprechender Weise wird an der Lenksäule des Fahrzeugs ein Klemmsitz angebracht, an dem ein Ausleger vorgesehen ist und dieser Ausleger dann über einen Hebel mit einem am Rotationslenkungsdämpfer vorgesehenen Hebel verbunden. Wird das so mit einem Lenkungsdämpfer versehene Fahrzeug nun beispielsweise in unwegsamen Gelände bewegt und es bei der Fahrt daher zu entsprechenden auf den Fahrzeugrahmen einwirkenden Stoßbelastungen kommt, so können sich die genannten Klemmverbindungen in unbeabsichtigter Weise lösen, was selbstverständlich nicht erwünscht ist.

Zudem ist es bei einem so ausgebildeten Fahrzeug nicht vorgesehen, die vertikale Position der Lenkstange einfach zu modifizieren, da sich die beschriebene Schweißkonstruktion hierzu nicht eignet.

Es ist auch bereits ein Fahrzeug bekannt geworden, bei dem die Lenksäule aus einem Aluminiumwerkstoff gebildet ist und ebenso ein aus einem Aluminiumwerkstoff gebildeter Lenkhebel mit der Lenksäule verschweißt ausgebildet ist. Bei der Befestigung des Lenkhebels an der Lenksäule kommt es beim Schweißen zu einem Temperaturverzug, der nur mit aufwendigen Maßnahmen beherrschbar ist. Schließlich ist auch bereits ein gattungsgemäßes Fahrzeug mit einem aus einem Stahlwerkstoff gefertigten geschmiedeten Lenkhebel bekannt geworden, der über eine Schraubenverbindung mit der Lenksäule im Rahmen einer Klemmverbindung verbunden werden kann.

Die genannten Steuervorrichtungen besitzen im Falle einer Schweißkonstruktion den Nachteil eines hohen Gewichts und bei Verwendung eines Aluminiumwerkstoffs aufwendiger notwendiger Bearbeitungsschritte und sind darüber hinaus nicht für eine Anordnung eines Lenkungsdämpfers vorgesehen, der einfach am Fahrzeug angeordnet werden kann und bei einem wettbewerbsmäßigen Einsatz des Fahrzeugs nicht die Gefahr mit sich bringt, sich einfach und selbsttätig zu lösen. Darüber hinaus kann die Vertikalposition der Lenkstange bei den genannten Steuervorrichtungen nicht in unaufwendiger Weise modifiziert werden.

Anhand der JP 2005014675 A ist eine Lenksäule für ein Fahrzeug mit einem Fahrersattel bekannt geworden, die einen in der Lenksäule integrierten Lenkungsdämpfer besitzt. Ist es nun gewünscht, das Fahrzeug ohne einen solchen Lenkungsdämpfer zu betreiben, so kann die bekannte Lenksäule hierfür nicht verwendet werden.

Anhand der JP 10024884 A ist eine Steuervorrichtung mit einer Lenkstange bekannt geworden, die über eine Lenkerbrücke an einer Vorderradgabel befestigt werden kann und die Position der Lenkstange in Fahrzeuglängsrichtung eingestellt werden kann.

Anhand der WO 89/09156 A1 ist eine Steuervorrichtung für ein Fahrrad bekannt geworden, bei der die Position der Lenkstange relativ zur Längsrichtung des Fahrrads verändert werden kann, indem die Lenkerbrücke um 180 Grad relativ zu einer Aufnahme verdreht wird.

Anhand der US 5,931,049 ist eine Einstellvorrichtung für die Lenkstange eines Fahrrads bekannt geworden. Bei dieser kann über eine Winkeleinstellung einer an einem Joch verschwenkbar angeordneten Aufnahme der Abstand der Lenkstange relativ zur Sitzposition des Fahrers verändert werden, wobei sich durch diese Änderung gleichzeitig die Höhe der Lenkstange verändert.

Anhand der DE 200 09 433 U1 ist eine Vorrichtung zur Positionierung eines Lenkelements an einer Lenkgabel bekannt geworden, bei der die Position der Lenkstange relativ zur Längsrichtung des Fahrzeugs verändert werden kann.

Schließlich ist anhand der JP 2004122862 A eine Lenkstangenanordnungsstruktur für ein Fahrzeug bekannt geworden, bei der die Position der Lenkstange relativ zur Fahrzeuglängsrichtung verändert werden kann.

Ausgehend hiervon liegt der vorliegenden Erfindung nunmehr die Aufgabe zugrunde, eine Steuervorrichtung für ein zweispuriges Fahrzeug mit Fahrersattel und Fahrzeugrahmen zu schaffen, die eine Einstellung der Position der Lenkstange relativ zum Fahrersattel sowohl in Richtung der Fahrzeuglängsachse als auch in Richtung der Fahrzeughochachse ermöglicht und in unaufwendiger Weise mit einem Lenkungsdämpfer versehen werden kann und sich der Lenkungsdämpfer nicht in unerwünschter Weise vom Fahrzeug löst und in das Gesamtbild des Fahrzeugs integriert ist.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nun eine Steuervorrichtung für ein zweispuriges Fahrzeug mit Fahrersattel und Fahrzeugrahmen, wobei die Steuervorrichtung eine an einer Lenksäule angeordnete Lenkerbrücke und eine Lenkstange besitzt und an der Lenksäule ein Lenkhebel vorgesehen ist, der mit Spurstangen zur Übertragung einer Drehbewegung der Lenksäule auf die Fahrzeugräder gekoppelt ist, wobei die Lenkerbrücke und der Lenkhebel an der Lenksäule mittels einer lösbaren Verbindung festgelegt sind und an dem Lenkhebel ein Ausleger vorgesehen ist, der mit einem Lenkungsdämpfer koppelbar ist. Die nach der Erfindung vorgesehene Steuervorrichtung kommt daher ohne Schweißverbindungen aus. Sollte es nun erforderlich sein, die Relativposition der Lenkstange zum Fahrersattel in Längsachsrichtung der Lenksäule zu verändern, so kann hierzu einfach die vorhandene Lenksäule gegen eine eine andere Länge aufweisende Lenksäule ausgetauscht werden, die eine entsprechend der gewünschten Stellung der Lenkstange relativ zum Fahrersattel modifizierte Höhenposition aufweist. Darüber hinaus wird durch die erfindungsgemäß vorgesehene lösbare Verbindung zwischen der Lenkerbrücke und der Lenksäule sowie dem Lenkhebel und der Lenksäule erreicht, dass für die Lenkerbrücke und den Lenkhebel sowie die Lenksäule hochfeste und geringe spezifische Massen aufweisende Werkstoffe selektiert werden können, die nicht schweißbar sein müssen und auf diese Weise zu einer Verringerung der Gesamtmasse des Fahrzeugs beitragen. An dem Lenkhebel der erfindungsgemäßen Steuervorrichtung ist nun ein Ausleger vorgesehen, der beispielsweise mittels eines längenverstellbaren Hebels mit einem optional an dem Fahrzeug vorsehbaren Lenkungsdämpfer gekoppelt werden kann, so dass im Unterschied zu den bekannten Steuervorrichtungen keine Klemmbrücke oder dergleichen an der Lenksäule befestigt werden muss, sondern der Lenkungsdämpfer mit dem am Lenkhebel einstückig vorgesehenen Ausleger gekoppelt werden kann.

Hierzu ist es nach einer Weiterbildung der Erfindung vorgesehen, dass der Lenkungsdämpfer an einer am Fahrzeugrahmen ausgebildeten Aufnahme festlegbar ist und mittels eines Hebels mit dem Ausleger am Lenkhebel koppelbar ist. Es bedeutet dies mit anderen Worten, dass der am Lenkhebel vorgesehene Ausleger über einen beispielsweise längenverstellbaren Hebel mit dem Lenkungsdämpfer verbunden ist, der wiederum an einer am Fahrzeugrahmen vorgesehenen Aufnahme festgelegt werden kann, so dass es für den Benutzer des Fahrzeugs möglich ist, beispielsweise auch unterschiedliche Dämpfungscharakteristiken aufweisende Lenkungsdämpfer mit der Steuervorrichtung zu verbinden, um beispielsweise unterschiedlichen, dem jeweiligen Einsatz des Fahrzeugs entsprechenden Dämpfungscharakteristiken Rechnung zu tragen und eine schnelle Montage und/oder Demontage des Lenkungsdämpfers ermöglicht ist.

Um nun auch eine schnelle Veränderung der Position der Lenkstange relativ zur Fahrzeuglängsrichtung zu ermöglichen, ist es nach einer Weiterbildung der Erfindung vorgesehen, dass die Lenkstange an einer mit der Lenkerbrücke lösbar verbundenen Lenkstangenaufnahme festgelegt ist und der Abstand der Lenkstange in Fahrzeuglängsrichtung zu einer vorbestimmten Position am Fahrersattel mittels einer Drehung der Lenkerbrücke um 180 Grad relativ zur Lenksäule veränderbar ist. Damit kann - anders als bei den bekannten, eine Schweißverbindung zwischen der Lenkerbrücke und der Lenksäule aufweisenden Steuervorrichtungen - der Abstand der Lenkstange in Fahrzeuglängsrichtung zu einer vorbestimmten Position schnell verändert werden.

Zu diesem Zweck kann die lösbare Verbindung zwischen der Lenkerbrücke und der Lenksäule geöffnet werden und es muss nur die Lenkerbrücke um 180 Grad relativ zur vorherigen Position an der Lenksäule gedreht werden. Durch die eine Exzentrizität der Anbindung zwischen der Lenkstangenaufnahme und der Lenkerbrücke aufweisende Lenkerbrücke ist es möglich, die Relativposition der Lenkstange in Fahrzeuglängsrichtung einfach zu verändern.

Wie es vorstehend bereits erwähnt wurde, ist die Lenkerbrücke an der Lenksäule mittels einer lösbaren Verbindung festgelegt. Bei dieser lösbaren Verbindung kann es sich um eine Schraubenverbindung handeln, über die die Lenkerbrücke an der Lenksäule befestigt ist und die Lenksäule kann zu diesem Zweck mit in Abstand zueinander angeordneten Gewindebohrungen ausgestattet sein, so dass durch das Festlegen der Lenkerbrücke an der Lenksäule an unterschiedlichen an der Lenksäule vorgesehenen Gewindebohrungen auch eine Veränderung der Relativposition der Lenkerbrücke relativ zur Lenksäule möglich ist und somit beispielsweise eine Vertikaleinstellung der Position der Lenkerbrücke an der Lenksäule möglich ist.

Über die Lenksäule werden die mittels der Lenkstange eingebrachten Drehkräfte auf den Lenkhebel übertragen. Zu diesem Zweck ist es nach einer Weiterbildung der Erfindung vorgesehen, dass die Lenksäule mit einem Formschlussprofil versehen ist und an dem Formschlussprofil der mit einem komplementären Formschlussprofil versehene Lenkhebel lösbar festgelegt wird. Durch dieses Formschlussprofil wird eine einfach zu montierende und zu demontierende Steckverbindung zwischen dem Lenkhebel und der Lenksäule geschaffen, die eine sichere Drehkraftübertragung zwischen der Lenksäule und dem Lenkhebel ermöglicht.

Bei dieser Formschlussverbindung kann es sich nach einer Weiterbildung der Erfindung um eine Klemmsitzverbindung zwischen dem Lenkhebel und der Lenksäule handeln, wobei zusätzlich vorgesehen sein kann, dass neben dieser Klemmsitzverbindung zwischen dem Lenkhebel und der Lenksäule auch eine Schraubenverbindung vorgesehen ist, so dass ein unbeabsichtigtes Lösen des Lenkhebels an der Lenksäule vermieden wird.

Vorstehend wurde bereits erwähnt, dass der zur Anbindung des Lenkungsdämpfers an der Steuervorrichtung vorgesehene Ausleger einstückig am Lenkhebel ausgebildet sein kann. Bei diesem Lenkhebel kann es sich nun um ein Schmiedebauteil handeln, das aus einem Aluminiumwerkstoff gefertigt ist, insbesondere ein Werkstoff mit der Bezeichnung EN AW-7075 oder AIZnMgCu1.5.

Die erfindungsgemäße Steuervorrichtung lässt sich einfach und schnell montieren und demontieren und besitzt im Gegensatz zu den bekannten Steuervorrichtungen keine Schweißverbindung. Die Lenkerbrücke wird mittels einer Schraubenverbindung an der Lenksäule festgelegt, die gleichzeitig hohe Torsionssteifigkeit zur Drehkraftübertragung auf den Lenkhebel besitzt und dem Erfordernis der Gewichtsreduzierung Rechnung trägt. Um nun diesen Anforderungen gerecht zu werden, ist es nach einer Weiterbildung der Erfindung vorgesehen, dass die Lenksäule eine lang gestreckte Konfiguration besitzt mit einer innen liegenden Ausnehmung, die im Querschnitt insbesondere kreuzförmig ausgebildet ist und in einem Bereich mit größerer Wandstärke als im benachbarten Bereich mindestens eine Gewindebohrung aufweist zur Festlegung der Lenkerbrücke. Damit wird die Gewindebohrung in einem Querschnittsbereich der Lenksäule angebracht, der eine größere Wandstärke besitzt, als der zur Verringerung der Masse der Lenksäule benachbarte Bereich. Nach einer Ausführungsform gemäß der vorliegenden Erfindung kann die innen liegende Ausnehmung kreuzförmig ähnlich einem Malteserkreuz ausgebildet sein und im Bereich der so ausgebildeten größeren Wandstärke als im benachbarten Bereich die vorstehend genannte mindestens eine Gewindebohrung zur Festlegung der Lenkerbrücke besitzen.

Zur Festlegung der Lenkerbrücke an der Lenksäule kann die Lenkerbrücke nun nach der Erfindung eine Ausnehmung besitzen zur Ausbildung eines Klemmsitzes und aus einem Aluminiumwerkstoff, insbesondere AIZn4,5Mg1, ausgebildet sein. Damit trägt auch die Lenkerbrücke der erfindungsgemäßen schnellen Montierbarkeit beziehungsweise Demontierbarkeit der Steuervorrichtung Rechnung und trägt zur Verringerung der Masse der Steuervorrichtung bei.

Nach einer Weiterbildung der Erfindung ist es vorgesehen, dass Lenksäule am Fahrzeugrahmen mittels eines eine Gleitlagerbuchse aufweisenden Lagerbocks drehbar festgelegt ist und auf diese Weise die Steuervorrichtung am Fahrzeug schnell angebracht werden kann. Zu diesem Zweck wird die Lenksäule durch die Gleitlagerbuchse hindurchgeführt und anschließend wird die lösbare Verbindung zwischen der Lenksäule und dem Lenkhebel beziehungsweise der Lenksäule und der Lenkerbrücke, die jeweils als Schraubenverbindungen ausgebildet sein können, fixiert.

Um nun den beim Betrieb des mit der Steuervorrichtung ausgestatteten Fahrzeugs auftretenden stoßartigen Belastungen gerecht zu werden, ist es nach einer Weiterbildung der Erfindung vorgesehen, dass die Lenkerbrücke und der Lenkhebel an der Lenksäule jeweils mittels eines sich in Längsrichtung der Lenksäule erstreckenden Schraubenbolzens festlegbar sind, so dass zusätzlich zur Befestigung des Lenkhebels und der Lenkerbrücke an der Lenksäule jeweils mittels eines Klemmsitzes eine weitere lösbare Verbindung zwischen der Lenkerbrücke und der Lenksäule beziehungsweise dem Lenkhebel und der Lenksäule vorgesehen ist.

Die Erfindung wird nun im Folgenden anhand der Zeichnung näher erläutert. Diese zeigt in:
Fig. 1 eine Ausführungsform einer Steuervorrichtung gemäß der vorliegenden Erfindung in einer perspektivischen Explosionsdarstellung;
Fig. 2 eine Ansicht von oben auf die Steuervorrichtung in Einbaulage an einem Fahrzeugrahmen eines ATV;
Fig. 3A eine perspektivische Darstellung der Lenksäule;
Fig. 3B eine Schnittdarstellung der Lenksäule;
Fig. 4 eine perspektivische Darstellung einer Lenkerbrücke der Steuervorrichtung;
Fig. 5 eine perspektivische Darstellung eines Lagerbocks der Steuervorrichtung; und
Fig. 6 eine perspektivische Darstellung des Lenkhebels der Steuervorrichtung.

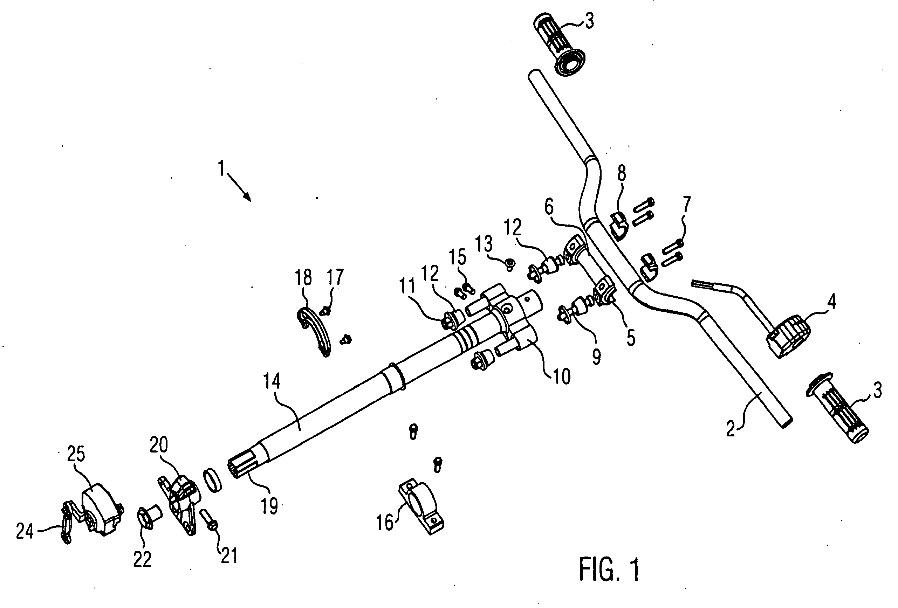

Fig. 1 der Zeichnung zeigt eine Ausführungsform einer Steuervorrichtung 1 gemäß der vorliegenden Erfindung in einer perspektivischen Explosionsdarstellung.

An einer Lenkstange 2 der zur Anordnung an einem ATV vorgesehenen Ausführungsform der Steuervorrichtung 1 können Handgriffe 3 und schematisch dargestellte Armaturen 4 befestigt werden.

Die Lenkstange 2 wird über eine Lenkstangenaufnahme 5 an der Steuervorrichtung 1 festgelegt, wobei die Lenkstangenaufnahme 5 eine einem geschnitten Rohrstück ähnliche Aufnahme 6 besitzt, in die die Lenkstange 2 eingesetzt werden kann und dann mittels Schraubbolzen 7 und Befestigungselementen 8 lösbar festgelegt werden kann.

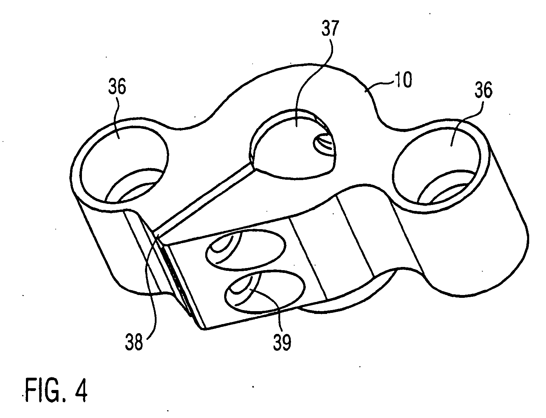

Von der Lenkstangenaufnahme 5 erstrecken sich Schraubbolzen 9 in Richtung zu einer Lenkerbrücke 10, die näher noch anhand von Fig. 4 der Zeichnung erläutert werden wird. Die Schraubbolzen 9 durchsetzen Ausnehmungen 36 in der Lenkerbrücke 10 und können an dem der Aufnahme 6 gegenüberliegenden Endbereich über Muttern 11 festgelegt werden, wobei an den Schraubbolzen 9 beidseits der Lenkerbrücke 10 konische Hülsenkörper 12 vorgesehen sind, die in die Ausnehmungen 36 der Lenkerbrücke 10 eingreifen.

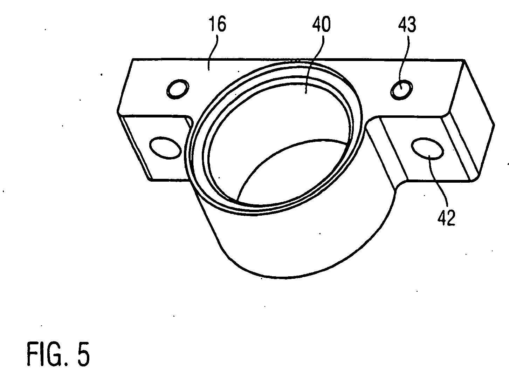

Die Lenkerbrücke 10 wird über einen Schraubbolzen 13 und Schraubbolzen 15 an einer Lenksäule 14 drehfest festgelegt. Über einen näher anhand von Fig. 5 ersichtlichen Lagerbock 16, der eine Gleitlagerbuchse 40 aufweist, kann die Lenksäule 14 an einem Fahrzeugrahmen 29 drehbar festgelegt werden. Eine Kabelführung 18 kann an dem Lagerbock 16 über Schraubbolzen 17 festgelegt werden und dient der Führung von Kabeln im Bereich der Lenksäule 14, die beispielsweise von Armaturen 4 an der Lenkstange 2 ausgehen können.

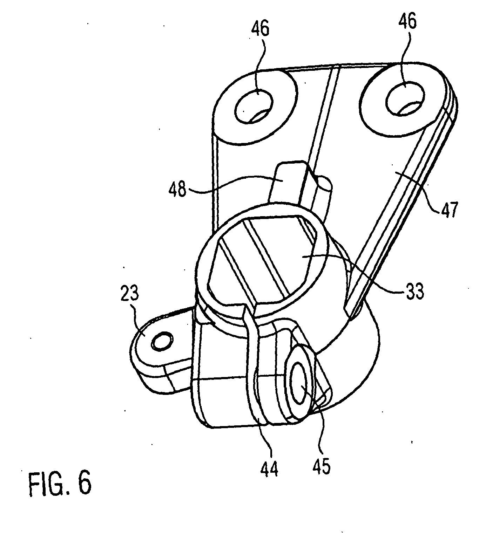

Die Lenksäule 14 weist an dem der Lenkstange 2 gegenüberliegenden Endbereich ein Formschlussprofil 19 in der Form eines Vierkantprofils auf, an dem ein mit einem komplementär ausgebildeten Vierkantprofil versehener Lenkhebel 20, der näher noch anhand von Fig. 6 der Zeichnung ersichtlich ist, über einen Schraubbolzen 21 und einen sich in Längsrichtung der Lenksäule 14 erstreckenden Schraubbolzen 22 lösbar festgelegt werden kann.

An dem Lenkhebel 20 ist ein näher anhand von Fig. 6 der Zeichnung ersichtlicher Ausleger 23 einstückig mit dem Lenkhebel 20 ausgebildet, an dem über einen längenverstellbaren Hebel 24 ein Rotationslenkungsdämpfer 25 festgelegt werden kann.

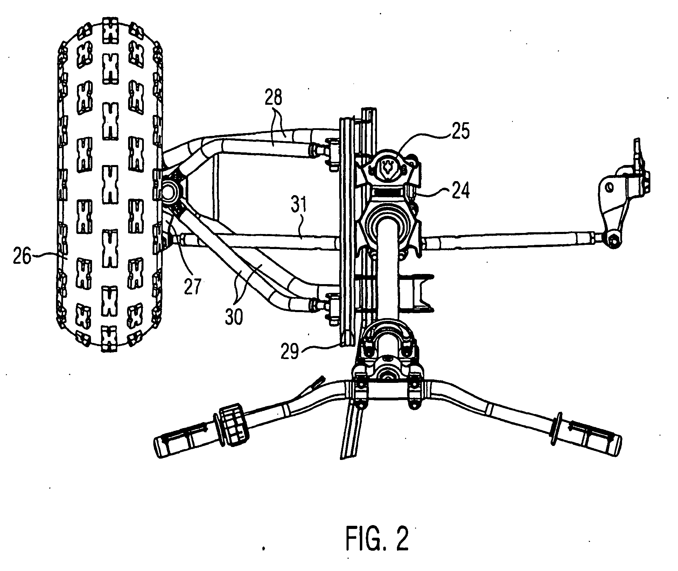

Fig. 2 der Zeichnung nun zeigt in einer Ansicht von oben ein linkes vorderes Fahrzeugrad 26 des ATV, welches an einem Radträger 27 geführt wird, der mittels Querlenkern 28 und 30 über nicht näher dargestellte Kugelgelenke mit einem Fahrzeugrahmen 29 verbunden ist. Eine nicht näher dargestellte Federdämpfereinheit, die ebenfalls mit dem Fahrzeugrahmen 29 verbunden ist, dient der Aufnahme von Federkräften und der Stoßdämpfung.

Am Radträger 27 greift eine Spurstange 31 über ein Kugelgelenk an und erstreckt sich von dem Radträger 27 weg in Richtung zu dem Lenkhebel 20, um dort über ein Kugelgelenk und eine Schraubenverbindung lösbar festgelegt zu werden.

Der Rotationslenkungsdämpfer 25 wird über Schraubbolzen an einem Blech befestigt, welches eine Aufnahme für den Rotationslenkungsdämpfer darstellt und mit dem Fahrzeugrahmen 29 verbunden ist.

Fig. 2 der Zeichnung zeigt auch den Hebel 24, der sich vom Rotationslenkungsdämpfer 25 zu dem in Fig. 6 der Zeichnung näher dargestellten Ausleger 23 an dem Lenkhebel 20 erstreckt.

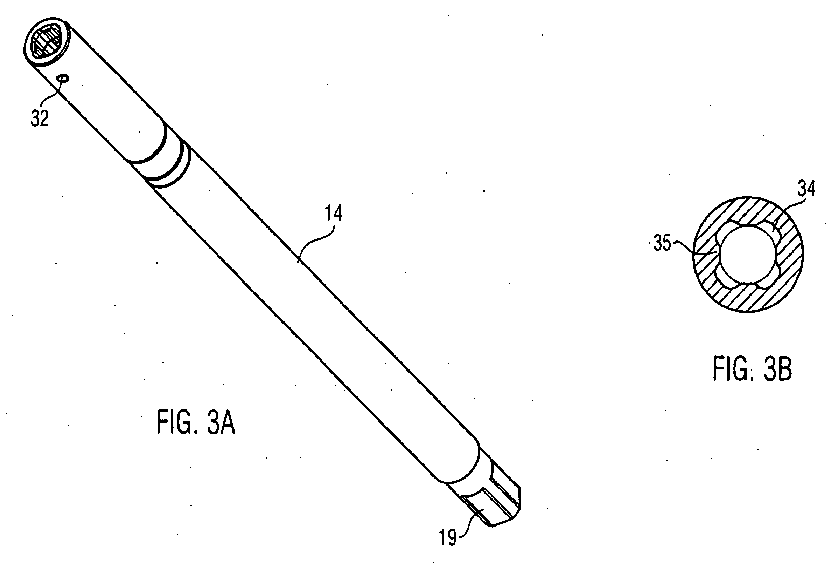

Fig. 3A der Zeichnung zeigt eine perspektivische Darstellung der Lenksäule 14. Diese weist eine Bohrung 32 auf, in die der Schraubbolzen 13 aus Fig. 1 der Zeichnung eingeschraubt werden kann. An der Lenksäule 14 kann auch eine zweite Gewindebohrung vorgesehen werden, um in Axiallängsrichtung der Lenksäule 14 eine Höhenverstellung der Lenkstange 2 relativ zum Fahrersattel oder Fahrzeugrahmen realisieren zu können.

An dem der Gewindebohrung 32 gegenüberliegenden Endbereich der Lenksäule 14 ist das Vierkantprofil 19 ausgebildet, welches zur formschlüssigen Verbindung mit dem ein komplementäres Vierkantprofil 33 aufweisenden Lenkhebel 20 ausgebildet ist. Die Lenksäule 14 kann unterschiedliche Längenerstreckungen aufweisen, je nachdem, welchen Abstand der Lenkstange 2 relativ zum Fahrersattel oder zum Fahrzeugrahmen der das ATV bewegende Fahrer wünscht. Da die Steuervorrichtung nicht mittels Schweißverbindungen einzelner Bauteile ausgebildet ist, kann die Lenksäule 14 schnell und einfach demontiert und montiert werden, um beispielsweise gegen eine Lenksäule 14 mit anderer Längserstreckung ausgetauscht zu werden.

Fig. 3B der Zeichnung nun zeigt eine Querschnittsansicht durch die Lenksäule mit einer Ausnehmung 34, die bei der dargestellten Ausführungsform kreuzförmig ähnlich einem Malteserkreuz ausgebildet ist. Die Gewindebohrung 32 nun kann in einem Bereich 35 mit größerer Wandstärke als in dem benachbarten Bereich der Lenksäule 14 ausgebildet werden. Die Bereiche 35 mit größerem Querschnitt als im benachbarten Bereich weisen auch an beiden gegenüberliegenden Enden der Längssäule 14 jeweils ein Innengewinde auf, über das der in Fig. 1 dargestellte Schraubbolzen 22 beziehungsweise an am gegenüberliegenden Endbereich der Lenksäule 14 ebenfalls vorgesehener vergleichbarer Schraubbolzen 22 zur Lagesicherung des Lenkhebels 20 beziehungsweise des Schraubbolzens 13 der Lenkerbrücke 10 lösbar festgelegt werden kann.

Fig. 4 der Zeichnung nun zeigt die Lenkerbrücke 10 mit Ausnehmungen 36, die von den Schraubbolzen 9 durchsetzt werden. Darüber hinaus weist die Lenkerbrücke 10 auch eine von einer kreisförmigen Ausbildung abweichend ausgebildete Ausnehmung 37 auf, die zusammen mit einem Klemmschlitz 38 einen Klemmsitz bildet dergestalt, dass die Lenkerbrücke 10 über die Schraubbolzen 15, die in Ausnehmungen 39 eingesetzt werden können, lösbar an der Lenksäule 14 festgelegt werden kann.

Fig. 5 der Zeichnung zeigt den in Fig. 1 ersichtlichen Lagerbock 16 mit einer Gleitlagerbuchse 40, in der die Lenksäule 14 drehbar aufgenommen werden kann und zwar derart, dass die Lenksäule 14 mit dem näher anhand von Fig. 3 ersichtlichen abgesetzten Bereich 41 zur Anordnung kommt. Die Bohrungen 42 beziehungsweise 43 dienen der Festlegung des Lagerbocks 16 am Fahrzeugrahmen 29 beziehungsweise der Festlegung der Kabelführung 18.

Fig. 6 der Zeichnung nun zeigt den als Schmiedebauteil aus einem Aluminiumwerkstoff AW-7075 (AIZnMgCu1.5) gebildeten Lenkhebel in einer perspektivischen Darstellung.

Der Lenkhebel 20 besitzt das bereits beschriebene Vierkantprofil 33 zur Anordnung des Lenkhebels am komplementär ausgebildeten Vierkantprofil 19 der Lenksäule 14. Der Lenkhebel 20 wird dabei von einem Ende der Lenksäule 14 her über das Vierkantprofil 19 geschoben und kann dann über seine als Klemmsitz ausgebildete Konfiguration mit einem Klemmschlitz 44 und einer Bohrung 45, in die der in Fig. 1 dargestellte Schraubbolzen 21 eingesetzt werden kann, an der Lenksäule 14 lösbar festgelegt werden. An dem einstückig mit dem Lenkhebel 20 ausgebildeten Ausleger 23 kann der längenverstellbare Hebel 24 des Rotationslenkungsdämpfers 25 lösbar festgelegt werden. Der Lenkhebel 20 weist zwei Bohrungen 46 an einem ähnlich einer dreieckförmigen Platte ausgebildeten Ansatz 47 auf, die von Schraubbolzen durchsetzt werden können, die zur lösbaren Festlegung von Kugelgelenken der Spurstangen 31 dienen. Ein Anschlag 48 dient der Lenkwinkelbeschränkung, wobei der Anschlag 48 zu diesem Zweck mit am Fahrzeugrahmen 29 ausgebildeten Anschlägen zur Anlage kommt.

Die erfindungsgemäß ausgebildete Steuervorrichtung kann nun am Fahrzeugrahmen eines als Beispiel genannten ATV schnell angebracht und schnell davon demontiert werden, um beispielsweise die Lenksäule gegen eine eine andere Länge aufweisende Lenksäule auszutauschen. Darüber hinaus besitzt die erfindungsgemäße Steuervorrichtung gegenüber bekannten Steuervorrichtungen einen Gewichtsvorteil, da der Lenkhebel, die Lenksäule und die Lenkerbrücke und andere Bauteile der Steuervorrichtung aus Aluminiumwerkstoffen gebildet werden können und daher die Steuervorrichtung dazu beiträgt, das Gesamtgewicht des Fahrzeugs zu verringern. Da die Steuervorrichtung Bauteile besitzt, die lösbar miteinander verbunden werden und hierzu keine Schweißverbindung erforderlich ist, können sich auch die an bekannten Steuervorrichtungen auftretenden Nachteile bezüglich der Formhaltigkeit aufgrund von Schweißverzug nicht einstellen.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Steuervorrichtung
- 2: Lenkstange
- 3: Handgriffe
- 4: Armaturen
- 5: Lenkstangenaufnahme
- 6: Aufnahme
- 7: Schraubbolzen
- 8: Befestigungselemente
- 9: Schraubbolzen
- 10: Lenkerbrücke
- 11: Muttern
- 12: Hülsenkörper
- 13: Schraubbolzen
- 14: Lenksäule
- 15: Schraubbolzen
- 16: Lagerbocks
- 17: Schraubbolzen
- 18: Kabelführung
- 19: Vierkantprofil
- 20: Lenkhebel
- 21: Schraubbolzen
- 22: Schraubbolzen
- 23: Ausleger
- 24: Hebel
- 25: Rotationslenkungsdämpfer

- 26: Fahrzeugrad
- 27: Radträger
- 28: Querlenker
- 29: Fahrzeugrahmen
- 30: Federdämpfereinheit
- 31: Spurstange
- 32: Gewindebohrung
- 33: Vierkantprofil
- 34: Ausnehmung
- 35: Bereich
- 36: Ausnehmung
- 37: Ausnehmung
- 38: Klemmschlitz
- 39: Ausnehmung
- 40: Gleitlagerbuchse
- 41: Bereich
- 42: Bohrung
- 43: Bohrung
- 44: Klemmschlitz
- 45: Bohrung
- 46: Bohrung
- 47: Ansatz
- 48: Anschlag

## Patentansprüche

1. Steuervorrichtung für ein zweispuriges Fahrzeug mit Fahrersattel und Fahrzeugrahmen, wobei die Steuervorrichtung eine an einer Lenksäule (14) angeordnete Lenkerbrücke (10) und eine Lenkstange (2) besitzt und an der Lenksäule (14) ein Lenkhebel (20) vorgesehen ist, der mit Spurstangen (31) zur Übertragung einer Drehbewegung der Lenksäule (14) auf Fahrzeugräder (26) gekoppelt ist, wobei der Lenkhebel (20) an der Lenksäule (14) mittels einer lösbaren Verbindung festgelegt ist, **dadurch gekennzeichnet, dass** die Lenkerbrücke (10) an der Lenksäule (14) mittels einer lösbaren Verbindung festgelegt ist und an dem Lenkhebel (20) ein Ausleger (23) vorgesehen ist, der mit einem Lenkungsdämpfer (25) koppelbar ist.

2. Steuervorrichtung nach Anspruch 1, **dadurch gekennzeichnet, dass** der Lenkungsdämpfer (25) an einer am Fahrzeugrahmen (29) ausgebildeten Aufnahme festlegbar und mittels eines Hebels (24) mit dem Ausleger (23) am Lenkhebel (20) koppelbar ist.

3. Steuervorrichtung nach Anspruch 1 oder 2, **dadurch gekennzeichnet, dass** die Lenkstange (2) an einer mit der Lenkerbrücke (10) lösbar verbundenen Lenkstangenaufnahme (5) festgelegt ist und der Abstand der Lenkstange (2) in Fahrzeuglängsrichtung zu einer vorbestimmten Position am Fahrersattel mittels einer Drehung der Lenkerbrücke (10) um 180 Grad relativ zur Lenksäule (14) veränderbar ist.

4. Steuervorrichtung nach einem der vorstehenden Ansprüche, **dadurch gekennzeichnet, dass** die Lenkerbrücke (10) mittels einer Schraubenverbindung an der Lenksäule (14) festgelegt ist und die Lenksäule (14) mit mindestens einer Gewindebohrung (32) für die Schraubenverbindung ausbildbar ist.

5. Steuervorrichtung nach einem der vorstehenden Ansprüche, **dadurch gekennzeichnet, dass** die Lenksäule (14) mit einem Formschlussprofil (19) versehen ist und an dem Formschlussprofil (19) der mit einem komplementären Formschlussprofil (33) versehene Lenkhebel (20) lösbar festgelegt ist.

6. Steuervorrichtung nach einem der vorstehenden Ansprüche, **dadurch gekennzeichnet, dass** der Lenkhebel (20) an der Lenksäule (14) mittels einer Klemmsitzverbindung und/oder einer Schraubenverbindung lösbar festgelegt ist.

7. Steuervorrichtung nach einem der vorstehenden Ansprüche, **dadurch gekennzeichnet, dass** der Lenkhebel (20) ein Schmiedebauteil ist und aus einem Aluminiumwerkstoff, insbesondere AlZnMgCu1.5, gebildet ist.

8. Steuervorrichtung nach einem der vorstehenden Ansprüche, **dadurch gekennzeichnet, dass** die Lenksäule (14) eine langgestreckte Konfiguration besitzt mit einer innenliegenden Ausnehmung (34), die im Querschnitt insbesondere kreuzförmig ausgebildet ist und in einem Bereich mit größerer Wandstärke als im benachbarten Bereich mindestens eine Gewindebohrung (32) zur Festlegung der Lenkerbrücke (10) besitzt.

9. Steuervorrichtung nach einem der vorstehenden Ansprüche, **dadurch gekennzeichnet, dass** die Lenkerbrücke (10) eine Ausnehmung (37) zur Ausbildung eines Klemmsitzes besitzt und aus einem Aluminiumwerkstoff, insbesondere AlZn4,5Mg1, gebildet ist.

10. Steuervorrichtung nach einem der vorstehenden Ansprüche, **dadurch gekennzeichnet, dass** die Lenksäule (14) am Fahrzeugrahmen (29) mittels eines eine Gleitlagerbuchse (40) aufweisenden Lagerbocks (16) drehbar festgelegt ist.

11. Steuervorrichtung nach einem der vorstehenden Ansprüche, **dadurch gekennzeichnet, dass** die Lenkerbrücke (10) und der Lenkhebel (20) an der Lenksäule (14) jeweils mittels eines sich in Längsrichtung der Lenksäule (14) erstreckenden Schraubbolzens (22) festlegbar sind.

12. Steuervorrichtung nach einem der vorstehenden Ansprüche, **dadurch gekennzeichnet, dass** die Lenksäule (14) aus einem Aluminiumwerkstoff, insbesondere AlZn4,5Mg1, gebildet ist.

## Claims

1. Control device for a two-track vehicle having a driver's saddle and a vehicle frame, wherein the control device has a handlebar bridge (10) arranged on a steering column (14) and a handlebar (2), and a steering arm (20) is provided on the steering column (14), which steering arm is coupled with track rods (31) for transmitting a rotary movement of the steering column (14) to vehicle wheels (26), wherein the steering arm (20) is fastened to the steering column (14) by means of a releasable connection, **characterised in that** the handlebar bridge (10) is fastened to the steering column (14) by means of a releasable connection and an extension arm (23) is provided on the steering arm (20), which extension arm can be coupled to a steering damper (25).

2. Control device according to Claim 1, **characterised in that** the steering damper (25) can be fastened to a holder formed on the vehicle frame (29) and can be coupled to the extension arm (23) on the steering arm (20) by means of a lever (24).

3. Control device according to Claim 1 or 2, **characterised in that** the handlebar (2) is fastened to a handlebar holder (5) which is connected releasably to the handlebar bridge (10), and the distance of the handlebar (2) from a predefined position on the driver's saddle in the longitudinal direction of the vehicle can be changed by rotating the handlebar bridge (10) by 180 degrees relative to the steering column (14).

4. Control device according to one of the preceding claims, **characterised in that** the handlebar bridge (10) is fastened to the steering column (14) by means of a screw connection, and the steering column (14) can be configured for the screw connection with at least one threaded bore (32).

5. Control device according to one of the preceding claims, **characterised in that** the steering column (14) is provided with a form-fitting profile (19), and the steering arm (20) provided with a complementary form-fitting profile (33) is fastened releasably on the form-fitting profile (19).

6. Control device according to one of the preceding claims, **characterised in that** the steering arm (20) is fastened releasably to the steering column (14) by means of a clamp-fit connection and/or a screw connection.

7. Control device according to one of the preceding claims, **characterised in that** the steering arm (20) is a forged component and is formed from an aluminium material, in particular AlZnMgCu1.5.

8. Control device according to one of the preceding claims, **characterised in that** the steering column (14) has an elongate configuration with an internal recess (34), which has an in particular cross-shaped cross section and has at least one threaded bore (32) for fastening the handlebar bridge (10) in a region of greater wall thickness than in the adjacent region.

9. Control device according to one of the preceding claims, **characterised in that** the handlebar bridge (10) has a recess (37) for forming a clamp fit and is formed from an aluminium material, in particular AlZn4.5Mg1.

10. Control device according to one of the preceding claims, **characterised in that** the steering column (14) is fastened in a rotatable manner to the vehicle frame (29) by means of a bearing block (16) which has a sliding bushing (40).

11. Control device according to one of the preceding claims, **characterised in that** the handlebar bridge (10) and the steering arm (20) can each be fastened to the steering column (14) by means of a bolt (22) which extends in the longitudinal direction of the steering column (14).

12. Control device according to one of the preceding claims, **characterised in that** the steering arm (14) is formed from an aluminium material, in particular AlZn4.5Mg1.

## Revendications

1. Dispositif de commande pour un véhicule à deux voies avec étrier conducteur et châssis de véhicule, le dispositif de commande présentant un pont de bras oscillant (10), disposé sur une colonne de direction (14), et une barre de direction (2), et un levier de commande de direction (20) étant prévu sur la colonne de direction (14), lequel levier est couplé avec des barres d'accouplement (31) pour la transmission d'un mouvement de rotation de la colonne de direction (14) à des roues de véhicule (26), le levier de commande de direction (20) étant fixé sur la colonne de direction (14) au moyen d'une liaison amovible, **caractérisé en ce que** le pont de bras oscillant (10) est fixé sur la colonne de direction (14) au moyen d'une liaison amovible et un cantilever (23), qui peut être couplé avec un amortisseur de direction (25), est prévu sur le levier de commande de direction (20).

2. Dispositif de commande selon la revendication 1, **caractérisé en ce que** l'amortisseur de direction (25) peut être fixé sur un logement conçu sur le châssis du véhicule (29) et peut être couplé au moyen d'un levier (24) avec le cantilever (23) sur le levier de commande de direction (20).

3. Dispositif de commande selon la revendication 1 ou 2, **caractérisé en ce que** la barre de direction (2) est fixée sur un logement de barre de direction (5) relié de façon amovible au pont de bras oscillant (10) et la distance de la barre de direction (2) dans le sens longitudinal du véhicule à une position prédéfinie sur l'étrier conducteur peut être modifiée au moyen d'une rotation du pont de bras oscillant (10) de 180 degrés par rapport à la colonne de direction (14).

4. Dispositif de commande selon l'une des revendications précédentes, **caractérisé en ce que** le pont de bras oscillant (10) est fixé au moyen d'une liaison à vis sur la colonne de direction (14) et la colonne de direction (14) peut être conçue avec au moins un alésage fileté (32) pour la liaison à vis.

5. Dispositif de commande selon l'une des revendications précédentes, **caractérisé en ce que** la colonne de direction (14) est dotée d'un profil à liaison de forme (19) et le levier de commande de direction (20), doté d'un profil à liaison de forme (33) complémentaire, est fixé de façon amovible sur le profil à liaison de forme (19).

6. Dispositif de commande selon l'une des revendications précédentes, **caractérisé en ce que** le levier de commande de direction (20) est fixé sur la colonne de direction (14) au moyen d'une liaison par ajustement serré et/ou d'une liaison à vis.

7. Dispositif de commande selon l'une des revendications précédentes, **caractérisé en ce que** le levier de commande de direction (20) est un élément de construction forgé et est formé à base d'un matériau d'aluminium, en particulier du AlZnMgCu1.5.

8. Dispositif de commande selon l'une des revendications précédentes, **caractérisé en ce que** la colonne de direction (14) présente une configuration étirée en longueur avec un évidement (34) intérieur, qui est conçu en particulier avec une forme croisée en section et présente, dans une zone avec une épaisseur de paroi plus grande que dans la zone voisine, au moins un alésage fileté (32) pour la fixation du pont de bras oscillant (10).

9. Dispositif de commande selon l'une des revendications précédentes, **caractérisé en ce que** le pont de bras oscillant (10) présente un évidement (37) pour la formation d'un ajustement serré et est formé à base d'un matériau d'aluminium, en particulier du AlZn4,5Mg1.

10. Dispositif de commande selon l'une des revendications précédentes, **caractérisé en ce que** la colonne de direction (14) est fixée de façon rotative sur le châssis du véhicule (29) au moyen d'un support de palier (16) présentant un coussinet lisse (40).

11. Dispositif de commande selon l'une des revendications précédentes, **caractérisé en ce que** le pont de bras oscillant (10) et le levier de commande de direction (20) peuvent être fixés sur la colonne de direction (14) respectivement au moyen d'un boulon fileté (22) s'étendant dans la direction longitudinale de la colonne de direction (14).

12. Dispositif de commande selon l'une des revendications précédentes, **caractérisé en ce que** la colonne de direction (14) est formée à base d'un matériau d'aluminium, en particulier du AlZn4,5Mg1.
